# EUROPÄISCHE PATENTSCHRIFT

(11) **EP 3 614 000 B1**
(45) Veröffentlichungstag und Bekanntmachung des Hinweises auf die Patenterteilung: **12.08.2020**
(21) Anmeldenummer: 18190779.1
(22) Anmeldetag: 24.08.2018
(51) Int. Cl.: F15B 15/28, B25J 9/16, B25J 9/20, B25J 15/02

(54) **VERFAHREN UND VORRICHTUNG ZUR AUTOMATISCHEN ERKENNUNG VON GREIFERSTELLUNGEN**
METHOD AND DEVICE FOR AUTOMATICALLY DETERMINING THE POSITION OF GRIPPERS
PROCÉDÉ ET DISPOSITIF DE DÉTECTION AUTOMATIQUE DES POSITIONS DE PINCE

(43) Veröffentlichungstag der Anmeldung: 26.02.2020
(73) Patentinhaber: SICK AG, 79183 Waldkirch (DE)
(72) Erfinder: Bludau, Thomas, 79111 Denzlingen (DE)

(56) Entgegenhaltungen:
- EP-A1- 3 147 737
- DE-A1- 3 632 151
- US-A1- 2004 226 183
- KOPACEK P ET AL: "PROGRAMMIERBARER ROBOTERGREIFER", ELEKTROTECHNIK UND INFORMATIONSTECHNIK, SPRINGER VERLAG, WIEN, AT, Bd. 113, Nr. 7/08, 1. Juli 1996 (1996-07-01), Seiten 526-531, XP000633392, ISSN: 0932-383X

## Beschreibung

Die Erfindung betrifft ein Verfahren und eine Vorrichtung zur automatischen Erkennung von Greiferstellungen, nämlich einer ersten, die einem Ruhezustand entspricht, in dem kein Objekt gegriffen ist, wenigstens einer zweiten, in der ein Objekt gegriffen ist und einer dritten, in der kein Objekt gegriffen ist, obwohl es hätte gegriffen werden sollen.

Greifer, bei denen die Kenntnis der Greiferstellungen wichtig ist, sind häufig sogenannte Backengreifer von z.B. Robotern. Mechanische Backengreifer werden in der Automatisierungsindustrie für vielfältige Handlingaufgaben genutzt. Es wird dabei zwischen Innen- und Außengreifern unterschieden. Außengreifer fassen ein Objekt von außen. Der Greifer kann die Zustände "Backen auf", "Objekt gegriffen" und "Backen zu" einnehmen. Innengreifer fassen ein hohles Objekt von innen. Der Innengreifer kann dieselben Zustände wie der Außengreifer einnehmen, wobei die einzelnen Stellungen jedoch andere Bedeutung haben, denn z.B. "Backen auf" bei einem Außengreifer bedeutet "Ruhezustand" und bei einem Innengreifer bedeutet es aber "am Objekt vorbeigegriffen". Für den Benutzer sind eigentlich nur folgende Zustände interessant:
- Greifer in Ruhestellung ("idle") → es soll kein Objekt gegriffen werden;
- Greifer hat Objekt gegriffen ("object") → es wurde erfolgreich ein Objekt gegriffen;
- Greifer hat an Objekt vorbeigegriffen ("no object") → die Backen haben sich über das erwartete Objekt hinaus geschlossen (Außengreifer) bzw. geöffnet (Innengreifer)

Das Problem für den Anwender besteht nun darin, dass er jeden dieser drei Zustände manuell einlernen muss. Dieser Vorgang ist sehr zeitintensiv und aufwändig, denn dazu wird der einzelne Greifer in die entsprechende Position gefahren und ein Einlernbefehl an einen Sensor, der am Greifer dessen Stellung detektiert, gesendet. Der Sensor speichert dann diese Position, so dass er später im laufenden Betrieb bei Detektion dieser Position des Greifers ein entsprechendes Signal "idle", "object" oder "no object" geben kann.

DE 36 32 151 A1 beschreibt ein Greifersystem, das programmierbar ist, also ein System, bei dem die Greiferpositionen einzeln einprogrammiert/eingegeben werden.

US 2004/0226183 A1 befasst sich ausschließlich mit der Positionsmessung eines Hubkolbens.

EP 3 147 737 A1 betrifft ein Greifersystem, bei dem die Bewegungsgeschwindigkeit der Greifer erfasst wird, damit die Greifer nicht so hart gegen Endstellungen anschlagen, um die Lebensdauer und die Greifzyklen zu erhöhen.

Ausgehend von diesem Stand der Technik ist es Aufgabe der Erfindung, ein verbessertes Verfahren und eine entsprechende Vorrichtung bereitzustellen, mit der dieses Einlernen der Positionen vereinfacht werden kann.

Diese Aufgabe wird gelöst durch einen Sensor mit den Merkmalen des Anspruchs 1 und ein Verfahren zum Einlernen des Sensors mit den Merkmalen des Anspruchs 4.

Der wesentliche Vorteil des erfindungsgemäßen Verfahrens zum Einlernen eines Sensors besteht darin, dass die Greiferzustände automatisch eingelernt werden und zwar unabhängig davon, ob es sich um einen Außengreifer oder einen Innengreifer handelt und auch unabhängig von der Startposition des Greifers. Am Ende des Verfahrens sind die Greiferstellungen "idle", "object" und "no object" eingelernt und dem System bekannt. Der Anwender muss dafür lediglich den Einlernprozess starten. Der Einlernvorgang ist damit enorm beschleunigt und vereinfacht, so dass auch ungelerntes Personal diesen durchführen kann.

Ein weiterer Vorteil ist, dass auch mehrere zweite Greiferstellungen eingelernt werden können, also das Greifen von verschieden großen Objekten möglich ist, wobei die Objekte zusätzlich über die zweiten Greiferstellungen unterscheidbar sind.

Dafür ist es vorteilhaft, wenn das Verfahren einen Schritt des Eingebens der Anzahl unterschiedlicher zu greifender Objekte bzw. Anzahl der zweiten Greiferstellungen umfasst, so dass verschiedene, der Anzahl unterschiedlicher Objekte entsprechende Einlernprozesse durchführbar sind.

Vorteilhaft ist, wenn der Sensor ein monotones Signal (also monoton steigend oder fallend) über die Bewegungsbahn erzeugt, so dass für die Zuordnung der Greiferstellungen zu den Positionen die Positionen entlang der Bewegungsbahn der Größe nach sortiert werden können. Dann wird die zweite Greiferstellung der mittleren Position zugeordnet, bzw. die zweiten Greiferstellungen den mittleren Positionen zugeordnet. Die dritte Greiferstellung wird derjenigen der beiden verbleibenden Randpositionen zugeordnet, zu der die gleiche Bewegungsrichtung wie zu der mittleren Position bzw. den mittleren Positionen gespeichert wurde. Die erste Greiferstellung wird der verbleibenden Randposition zugeordnet.

In Weiterbildung der Erfindung werden nach dem Einlernvorgang und während des Normalbetriebes die Positionen des Betätigungselements bei einem Stopp des Greifers gespeichert. Aus allen gespeicherten Werten, die einer Greiferstellung entsprechen, wird ein Mittelwert gebildet und dieser Mittelwert als zukünftiger Wert für die Position genommen. Das hat den Vorteil, dass das erfindungsgemäße Verfahren nicht nur zum Einlernen der Zustände verwendet werden kann, sondern auch zum Nachführen der Greiferstellungen während der Laufzeit. Dafür wird das Verfahren auch während der Laufzeit weiterhin durchgeführt und jede erkannte Position über einen Mittelwertfilter der entsprechenden Greiferstellung zugeordnet. Somit kann während der Laufzeit die Robustheit des Systems bestehend aus Greifer und Sensor deutlich verbessert werden, da verschleißbedingte Toleranzen ignoriert werden können, bzw. automatisch berücksichtigt werden.

Vorrichtungsgemäß wird die Aufgabe gelöst mit einem Sensor mit den Merkmalen des Anspruch 1.

In einfacher vorteilhafter Weise ist das Betätigungselement ein Zylinderkolben eines pneumatischen oder hydraulischen Zylinders, und der Sensor erfasst die Position des Zylinderkolbens.

Der Sensor kann ein bekannter, zuverlässiger Magnetfeldsensor oder induktiver Sensor sein, der die Bewegungsbahn erfasst und ein von der Position des Betätigungselements abhängiges Signal erzeugt.

Besonders vorteilhaft ist es, wenn der Sensor die Auswerteeinheit und den Speicher integral enthält. Dann muss die Intelligenz, also hier die Kenntnis der Greiferstellungen, nicht extern in einer Robotersteuerung ausgelagert sein.

Ein besonderer Vorteil der Erfindung ist es auch, dass der Sensor zur Erfassung der Positionen des Betätigungselements an einer beliebigen Position angeordnet sein kann. Der Sensor muss lediglich das Betätigungselement auf der gesamten Bewegungsbahn erfassen können. Zur Installation muss man also lediglich den Sensor befestigen, in der Regel wird dies (irgendwo) in einer Befestigungsnut eines Arbeitszylinders sein, und den Einlernvorgang starten. Diese zwei Schritte sind so einfach, dass sie von ungelerntem Personal ausführbar sind.

Im Folgenden wird die Erfindung anhand von Ausführungsbeispielen unter Bezugnahme auf die Zeichnung im Einzelnen erläutert. In der Zeichnung zeigen:
- Fig. 1 bis 3: schematische Darstellungen von verschiedenen Stellungen eines als Außengreifer ausgebildeten Greifers zum Greifen eines Objektes;
- Fig. 4 bis 6: schematische Darstellungen von verschiedenen Stellungen eines als Innengreifer ausgebildeten Greifers;
- Fig. 7: schematische Darstellung einer erfindungsgemäßen Vorrichtung;
- Fig. 8 bis 12: Darstellungen wie Fig. 1 bis 3 zum Einlernen von mehreren zweiten Greiferstellungen zum Greifen von Objekten verschiedener Größe.

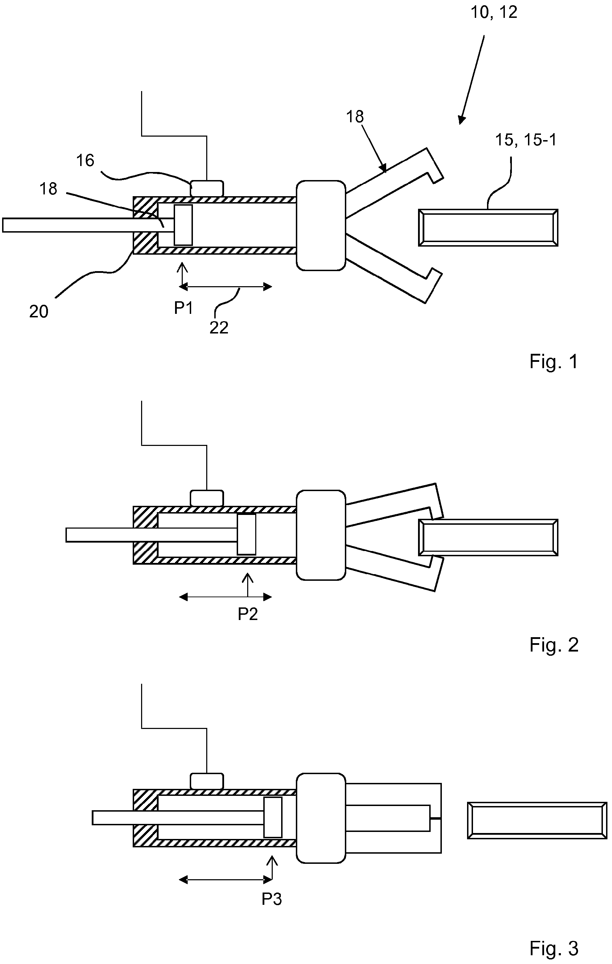

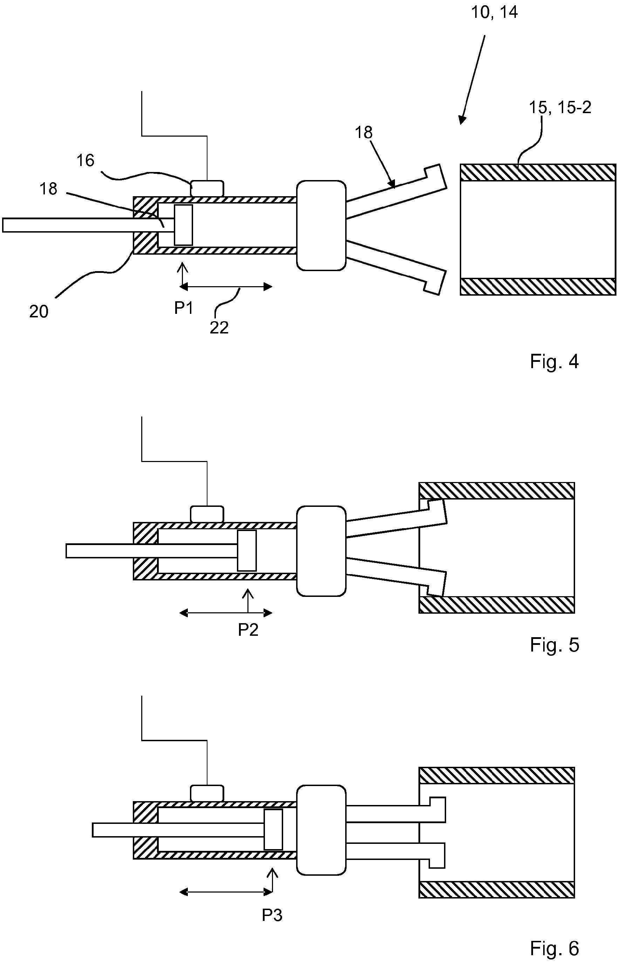

Die Erfindung betrifft einen Greifer 10. Dieser kann als Außengreifer 12, wie in den Fig. 1 bis 3 und 8 bis 12 dargestellt, ausgebildet sein oder als Innengreifer 14, wie in den Fig. 4 bis 6 dargestellt. Bei diesen Greifern 10 ist für den Betrieb die Kenntnis der Greiferstellungen von Greiferelementen 18 wichtig, also ob ein Objekt 15 gegriffen wurde, ob an dem Objekt 15 vorbeigegriffen wurde oder ob sich die Greiferelemente 18 in Ruhestellung befindet. Für den Anwender sind also folgende Zustände relevant:
- Greiferelemente 18 in Ruhestellung ("idle") → Objekt 15 nicht gegriffen;
- Greiferelemente 18 haben Objekt 15 gegriffen ("object") → es wurde erfolgreich das Objekt 15 gegriffen;
- Greiferelemente 18 haben an Objekt 15 vorbeigegriffen ("no object") → die Greiferelemente 18 haben sich über das erwartete Objekt 15 hinaus geschlossen (Außengreifer) bzw. geöffnet (Innengreifer).

Da Außengreifer ein Objekt 15-1 von außen fassen und Innengreifer ein Objekt 15-2 gerade umgekehrt von innen fassen, entsprechen die Greiferzustände "Backen auf", "Objekt gegriffen" und "Backen zu" unterschiedlichen Greiferstellungen. "Backen auf" (wie in Fig. 1) kann bei einem Außengreifer "idle" bedeuten, und bei einem Innengreifer kann es aber "no object" (wie in Fig. 4) bedeuten.

Um den Anwender in einfacher Weise aber nur die drei relevanten Stellungen "idle", "object" und "no object" zur Verfügung zu stellen und zwar unabhängig davon, welcher Art der Greifer ist, wird mit der Erfindung die folgende Lösung vorgeschlagen.

Zunächst sei bemerkt, dass die Greiferbewegung von einer Stellung in eine andere auf eine Linearbewegung entlang einer Bewegungsbahn eines Betätigungselements reduzierbar ist und eine Robotergreiferstellung einer Position des Betätigungselements auf der Bewegungsbahn entspricht. In den Ausführungsbeispielen ist das Betätigungselement als Hubkolben 18 ausgebildet, der sich in einem Arbeitszylinder 20 entlang seines Hubweges 22 (Bewegungsbahn) bewegt. Die Greiferstellungen "idle", "object" bzw. "no object" entsprechen im Falle des Außengreifers 12 nach Fig. 1 bis 3 Positionen P1, P2 bzw. P3. Die Nummerierung der Positionen ist zufällig und hängt davon ab, in welcher chronologischen Reihenfolge die Positionen eingelernt werden, wie weiter unten noch deutlich wird. In dem Ausführungsbeispiel nach Fig. 1 bis 3 entspricht P1 "idle", P2 entspricht "object", und P3 entspricht "no object". Im Falle des Innengreifers 14 nach dem Ausführungsbeispiel aus den Fig. 4 bis 6 entspricht "idle" P3, "object" P2 und "no object" P1.

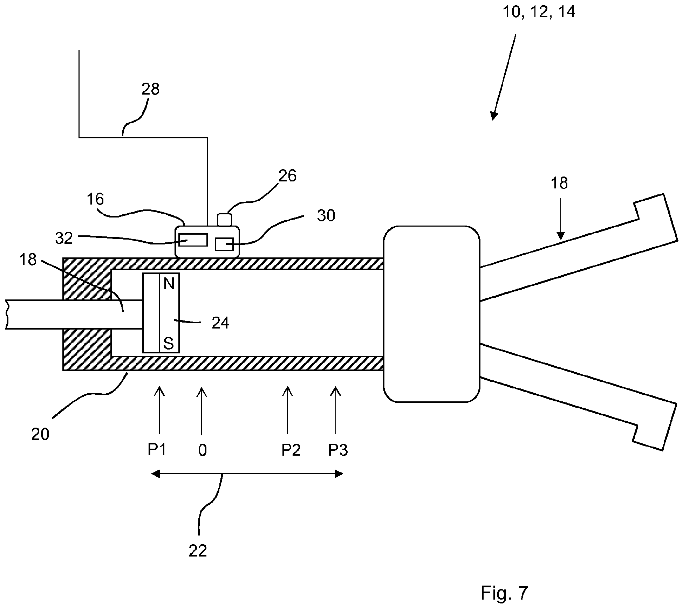

Erfindungsgemäß ist ein Sensor 16 vorgesehen, der in Fig. 7 nochmal etwas größer dargestellt ist. Der Sensor 16 hat einen Erfassungsbereich, der so groß ist, dass er den Hubkolben 18 des Arbeitszylinders 20 über den gesamten Hubweg 22 (Bewegungsbahn) erfassen kann. Dazu ist an dem Hubkolben 18 ein Permanentmagnet 24 angeordnet, über dessen Magnetfeld der Sensor 16 magnetisch oder induktiv die Position des Hubkolbens 18 erfassen kann. Dieses Sensorprinzip ist aus dem Stand der Technik bekannt. Die Befestigungsposition des Sensors 16 in Längsrichtung des Hubweges 22 an dem Arbeitszylinder 20 ist im Prinzip beliebig, solange der Hubkolben 18 mit dem Permanentmagnet 24 sich über den gesamten Hubweg 22 im Erfassungsbereich des Sensors 16 befindet.

Der Sensor 16 erzeugt intern ein monotones Detektionssignal, also monoton steigend oder fallend, über die Bewegungsbahn, also über den Hubweg 22, so dass Position und Detektionssignal eins-zu-eins korrelieren. Letztendlich kann das einer bestimmten Position entsprechende Detektionssignal über eine Datenverbindung 28 nach außen gegeben werden.

Der Sensor 16 weist ein Eingabemittel 26 zum Starten eines später beschriebenen Einlernvorganges auf. Das Eingabemittel 26 ist in Fig. 7 als Betätigungsknopf 26 dargestellt. Es kann aber auch softwaremäßig ausgeführt sein und über die Datenverbindung 28 an den Sensor 16 übermittelt werden.

Weiter weist der Sensor 16 einen Speicher 30 auf, zur Speicherung der Positionen P1, P2 und P3 des Hubkolbens 18 (Betätigungselements). Die Positionen befinden sich entlang der Bewegungsbahn, die hier durch den Hubweg 22 gebildet ist, und sind gemessen mit der Sensorposition als Nullpunkt. Für die Beispiele aus den Figuren ist P1 negativ und es gilt P1 < P2 < P3.

Weiter dient der Speicher 30 zum Ermitteln der Bewegungsrichtung des Hubkolbens 18 und Speichern von dessen Bewegungsrichtungen. Eine Bewegungsrichtung wird gespeichert, wenn auch eine Position gespeichert wird. Als Bewegungsrichtung wird diejenige gespeichert, aus der die gespeicherte Position angefahren wurde. Diese Bewegungsrichtung ist in diesem Kontext auch als der gespeicherten Position zugehörige Bewegungsrichtung bezeichnet. Ist beispielsweise eine Kolbenbewegung nach rechts als positive Bewegungsrichtung definiert und wird z.B. P2 in Fig. 7 vom Nullpunkt aus angefahren, also in positiver Richtung, dann wird eine positive Bewegungsrichtung zu P2 gespeichert. Im Einlernvorgang wird eine Position und die zugehörige Bewegungsrichtung nur beim ersten Mal Anfahren gespeichert und dann im weiteren Einlernvorgang nicht mehr überschrieben.

Weiter weist der Sensor eine integrierte Auswerteeinheit 32 auf. Die Auswerteinheit 32 führt die gesamte Auswertung durch und ist ausgebildet, den Einlernvorgang zu stoppen, wenn die unterschiedlichen Positionen P1, P2 und P3 gefunden und gespeichert wurden. Wie die Positionen gefunden werden, wird weiter unten beschrieben. Schließlich ist die Auswerteeinheit 32 auch ausgebildet, die Greiferstellungen "idle", "object" und "no object" den Positionen P1, P2 und P3 zuzuordnen. Die Zuordnung erfolgt in Abhängigkeit der gespeicherten Positionen P1, P2 und P3 und der zu den Positionen gehörenden Bewegungsrichtungen wie ebenfalls anhand des nachfolgend beschriebenen Verfahrens erläutert wird.

Das erfindungsgemäße Verfahren zur automatischen Erkennung der Greiferstellungen "idle", "object" und "no object" umfasst folgende Schritte:
In einem ersten Schritt wird der Einlernvorgang gestartet.

In einem zweiten Schritt werden die Positionen und die Bewegungsrichtungen des Hubkolbens 18 auf seiner Bewegungsbahn 22 mit einem Sensor 16 erfasst.

In einem dritten Schritt werden Greifbewegungen durchgeführt, wobei diese Bewegungen von einer der drei Stellungen zu einer anderen erfolgen und der Greifer 10 in jeder der Greiferstellungen stoppt.

In einem vierten Schritt wird das Stoppen vom Sensor 16 erkannt und die Position des Hubkolbens 18 (Betätigungselements) bei diesem Stopp gespeichert. Wenn ein solches Speichern einer Position erfolgt, wird gleichzeitig auch die zugehörige Bewegungsrichtung, aus der diese Position angefahren wurde, gespeichert. Wird während des Einlernvorganges eine Position mehrfach angefahren, wird diese nicht mehrfach gespeichert, sondern wurde nur beim ersten Mal Anfahren gespeichert.

Die nach Starten des Einlernvorganges zuerst gespeicherte Position erhält die Bezeichnung P1, die zweite P2 und die dritte P3. Die Nummerierung der Positionen ist also beliebig und hängt schlicht davon ab, in welcher Position sich der Hubkolben 18 befindet, wenn der Einlernvorgang gestartet wird.

Sind so viele unterschiedliche Positionen mit den zugehörigen Bewegungsrichtungen gespeichert wie es unterschiedliche Greiferstellungen gibt, wird der Einlernvorgang gestoppt; in dem vorgenannten Ausführungsbeispiel also drei Positionen. "Unterschiedlich" heißt in diesem Fall, dass die einzelnen Positionen weiter als ein geeignet definiertes Toleranzfenster auseinanderliegen. In den Ausführungsbeispielen nach den Fig. 1 bis 6 gibt es drei unterschiedliche Positionen, da nur ein Objekt gegriffen werden soll.

Wenn die Positionen und zugehörige Bewegungsrichtungen gespeichert sind, werden die Greiferstellungen "idle", "object" und "no object" zu den drei Positionen P1, P2 und P3 zugeordnet. Diese Zuordnung erfolgt einzig aus den gespeicherten Positionen und gespeicherten Bewegungsrichtungen heraus.

Dazu werden die drei gespeicherten Positionen der Größe nach sortiert. Im Falle der Ausführungsbeispiele nach den Figuren ist das Ergebnis der Sortierung bei jedem der Ausführungsbeispiele P1 < P2 < P3. Dass die Nummerierung hier auch mit der Größenordnung korreliert ist, wie gesagt, Zufall, weil die Ausführungsbeispiele nach Fig. 1 bis 6 so gewählt wurden und dabei angenommen wurde, dass die in den Figuren am weitesten links liegende Position als erste eingelernt wurde und die am weitesten rechts liegende als letzte eingelernt wurde.

Die mittlere dieser der Größe nach sortierten Positionen entspricht der zweiten Greiferstellung "object", weil das Greifen des Objekts 15-1 bzw. 15-2 immer zwischen der Ruhestellung "idle" und dem über das Objekt 15 Hinausgreifen "no object" liegt. In den Ausführungsbeispielen nach den Fig. 1 bis 6 ist das beides Mal P2.

Die beiden verbleibenden Positionen P1 und P3 sind Randpositionen. Derjenigen dieser beiden Positionen, zu der die gleiche Bewegungsrichtung wie zur mittleren Position P2 gespeichert wurde, wird die dritte Greiferstellung "no object" zugeordnet, denn "no object" wird immer aus der gleichen Richtung angefahren wie "object". Im Falle des Ausführungsbeispiels der Fig. 1 bis 3 mit dem Außengreifer entspricht "no object" der Position P3 (Fig. 3). Im Falle des Ausführungsbeispiels der Fig. 4 bis 6 mit dem Innengreifer entspricht "no object" der Position P1 (Fig. 4).

Die schließlich verbleibende andere Randposition, in dem Beispiel mit dem Außengreifer ist das P1 (Fig. 1) und im Falle des Innengreifers P3 (Fig. 6), entspricht der ersten Greiferstellung "idle".

Mit diesen Regeln erfolgt stets eine korrekte Zuordnung der Greiferstellungen "idle", "object" und "no object" zu den Positionen P1, P2 und P3. Je nachdem an welcher Stelle der Sensor 16 entlang des Hubweges 22 angeordnet ist und je nach Nummerierung der Positionen ergeben sich bestimmte Zuordnungen, die in ihrer Gesamtheit in nachfolgender Tabelle aufgeführt sind:

| Sortierung Positionen | Richtung Position 1 | Richtung Position 2 | Richtung Position 3 | Position 1 | Position 2 | Position 3 |
|---|---|---|---|---|---|---|
| P1 > P2 > P3 | Positiv | Positiv | Negativ | No object | Object | Idle |
| P1 > P2 > P3 | Positiv | Negativ | Negativ | Idle | Object | No Object |
| P1 > P3 > P2 | Positiv | Negativ | Positiv | No Object | Idle | Object |
| P1 > P3 > P2 | Positiv | Negativ | Negativ | Idle | No Object | Object |
| P2 > P1 > P3 | Positiv | Positiv | Negativ | Object | No Object | Idle |
| P2 > P1 > P3 | Negativ | Positiv | Negativ | Object | Idle | No Object |
| P2 > P3 > P1 | Negativ | Positiv | Positiv | Idle | No Object | Object |
| P2 > P3 > P1 | Negativ | Positiv | Negativ | No Object | Idle | Object |
| P3 > P1 > P2 | Positiv | Negativ | Positiv | Object | Idle | No Object |
| P3 > P1 > P2 | Negativ | Negativ | Positiv | Object | No Object | Idle |
| P3 > P2 > P1 | Negativ | Positiv | Positiv | Idle | Object | No Object |
| P3 > P2 > P1 | Negativ | Negativ | Positiv | No Object | Object | Idle |

Das Ausführungsbeispiel mit dem Außengreifer nach Fig. 1 bis 3 findet sich in der vorletzten Zeile und das Ausführungsbeispiel mit dem Innengreifer nach Fig. 4 bis 6 findet sich in der letzten Zeile.

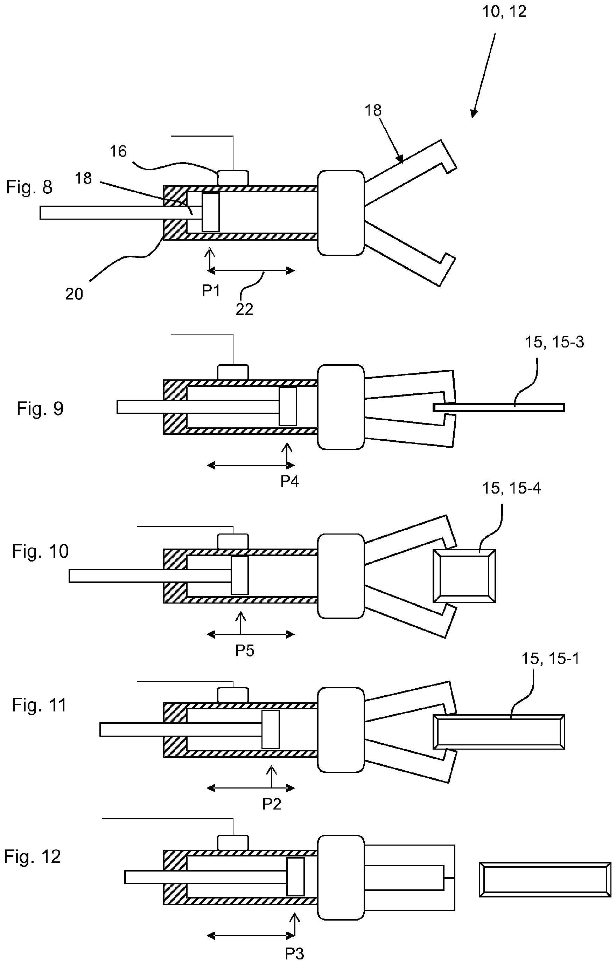

Nun soll ein weiteres Ausführungsbeispiel betrachtet werden, das in den Fig. 8 bis 12 dargestellt ist und das auch zur Erfindung gehört.

Dieses betrifft den Fall, bei dem Greiferstellungen für mehrere, unterschiedlich große Objekte 15 eingelernt werden sollen. In dem Ausführungsbeispiel gibt es drei unterschiedlich große Objekte 15-1, 15-3 und 15-4. Objekt 15-1 ist mittelgroß, Objekt 15-4 ist größer und Objekt 15-3 kleiner. Mit "groß", "größer" und "kleiner" ist lediglich gemeint, dass die Greiferelemente 18 des Außengreifers 10 beim größeren Objekt 15-4 weniger weit geschlossen sind, um das Objekt 15-4 zu greifen, als beim mittelgroßen Objekt 15-1 und erst recht als beim noch kleineren Objekt 15-3.

Es sind dann insgesamt fünf Positionen einzulernen, nämlich
- idle,
- object1 (Objekt 15-1 wurde gegriffen),
- object3 (Objekt 15-3 wurde gegriffen),
- object4 (Objekt 15-4 wurde gegriffen),
- no object.

Das geschieht genauso und mit den gleichen Regeln wie zu den obigen Ausführungsbeispielen nach den Fig. 1 bis 3 und 4 bis 6 erläutert. Zunächst wird der Einlernvorgang gestartet. Dann werden die Positionen und die Bewegungsrichtungen des Hubkolbens 18 auf seiner Bewegungsbahn 22 mit dem Sensor 16 erfasst. Es werden Greifbewegungen durchgeführt, wobei diese Bewegungen von einer der fünf Stellungen zu einer anderen erfolgen und der Greifer 10 in jeder der Greiferstellungen stoppt. Beim Stoppen werden die jeweilige Position des Hubkolbens 18 und die zugehörige Bewegungsrichtung gespeichert. In Realität kann das so erfolgen, dass nach Starten des Einlernvorganges der Greifer 10 Greifbewegungen ausführt und je nachdem, ob und welches Objekt 15 dem Greifer 10 vorgehalten wird, der Greifer 10
- die Greiferelemente öffnet (Fig. 8),
- ins Leere greift (Fig. 12),
- das kleine Objekt 15-3 greift (Fig. 9),
- das große Objekt 15-4 greift (Fig. 10),
- das mittelgroße Objekt 15-1 greift (Fig. 11).

Nach mehreren Greifzyklen und wenn jedes der drei Objekte einmal gegriffen wurde, sind die fünf Positionen P1 bis P5 gespeichert sowie die zugehörigen Bewegungsrichtungen. Es können so nur folgende Kombinationen gespeichert worden sein:
Position P1 mit Bewegungsrichtung negativ,
Position P2 mit Bewegungsrichtung positiv,
Position P3 mit Bewegungsrichtung positiv,
Position P4 mit Bewegungsrichtung positiv,
Position P5 mit Bewegungsrichtung positiv.

So wie die Nummerierung der gespeicherten Positionen in diesem Ausführungsbeispiel gewählt ist, wurde im Einlernprozess zuerst P1 angefahren (Fig. 8) und P1 gespeichert, dann das Objekt 15-1 gegriffen (Fig. 11) und P2 gespeichert, dann müssen die Greiferelement 18 wieder geöffnet worden sein und es wurde ins Leere gegriffen (Fig. 12) und P3 gespeichert. Im nächsten Greifzyklus wurde das Objekt 15-3 gegriffen und P4 gespeichert und schließlich das Objekt 15-4 gegriffen und P5 gespeichert.

Dann sind so viele unterschiedliche Positionen mit den zugehörigen Bewegungsrichtungen gespeichert, wie es unterschiedliche Greiferstellungen gibt, nämlich fünf.

Nun werden die Greiferstellungen "idle", "object1", "object2", "object3" und "no object" zu den fünf Positionen P1 bis P5 zugeordnet.

Die Größensortierung ergibt: P1<P5<P2<P4<P3.

Die drei mittleren dieser der Größe nach sortierten Positionen entsprechen den zweiten Greiferstellungen "object", von denen es drei gibt, da ja drei unterschiedlich große Objekte 15 gegriffen werden sollen. Die Größensortierung erlaubt gleichzeitig eine Zuordnung zu den Objekten. Das größte Objekt 15-4, also zweite Greiferstellung "object4" muss mit Position P5 korrelieren und analog zweite Greiferstellung "object1" mit P2 und zweite Greiferstellung "object3" mit P4.

Jetzt bleiben noch die Randpositionen P1 und P3 übrig. P3 hat dieselbe zugeordnete Bewegungsrichtung wie die "object" Positionen. Deshalb wird die dritte Greiferstellung "no object" P3 zugeordnet. Schließlich bleibt für "idle" die Zuordnung zu P1.

Damit ist der Einlernvorgang beendet und die Greiferstellungen sind automatisch erkannt worden.

In Weiterbildung der Erfindung werden nach dem Einlernvorgang und während des Normalbetriebes die Positionen des Betätigungselements 18 bei einem Stopp des Greifers 10 gespeichert. Aus allen gespeicherten Werten, die einer Greiferstellung entsprechen, wird ein Mittelwert gebildet und dieser Mittelwert als zukünftiger Wert für die Position genommen. So kann das erfindungsgemäße Verfahren nicht nur zum Einlernen der Zustände verwendet werden, sondern auch zum Nachführen der Greiferstellungen während der Laufzeit. Somit kann während der Laufzeit die Robustheit des Systems bestehend aus Greifer und Sensor deutlich verbessert werden, da verschleißbedingte Toleranzen automatisch berücksichtigt werden.

## Patentansprüche

1. Sensor zur automatischen Erfassung von drei Positionen (P1, P2, P3) eines einen Greifer (10) antreibenden Hubkolbens (18) entlang eines linearen Hubweges (22) und zur automatischen Zuordnung der drei Positionen (P1, P2, P3) zu drei Greiferstellungen, wobei in einer ersten Greiferstellung ("idle") kein Objekt (15) gegriffen ist, in einer zweiten Greiferstellung ("object") ein Objekt (15) gegriffen ist und in einer dritten Greiferstellung ("no object") kein Objekt (15) gegriffen ist, obwohl es hätte gegriffen werden sollen, **dadurch gekennzeichnet, dass** der Sensor (16) umfasst:
- ein Eingabemittel (26) zum Starten eines Einlernvorganges,
- einen Speicher (30),
- eine Auswerteeinheit (32),
- wobei der Sensor (16) ausgebildet ist, die Position des Hubkolbens (18) über einen am Hubkolben (18) angeordneten Permanentmagnet (24) magnetisch oder induktiv über den gesamten Hubweg (22) zu erfassen,
- wobei der Sensor (16) ausgebildet ist, im Einlernvorgang ein Stoppen des Hubkolbens (18) zu erkennen und die Position (P1, P2, P3) des Hubkolbens (18) bei diesem Stopp in dem Speicher (30) zu speichern,
- und weiter ausgebildet ist, bei diesem Stopp eine Bewegungsrichtung (positiv; negativ), aus der diese Position (P1, P2, P3) angefahren wurde zu erfassen und als zur Position zugehörige Bewegungsrichtung zu speichern,
- und die Auswerteinheit (32) ausgebildet ist, den Einlernvorgang zu stoppen, wenn drei verschiedene Positionen (P1, P2, P3) mit den zugehörigen Bewegungsrichtungen (positiv, negativ) gespeichert wurden,
- und die Auswerteeinheit (32) weiter ausgebildet ist, aus den gespeicherten Positionen (P1, P2, P3) und den gespeicherten, zugehörigen Bewegungsrichtungen (positiv, negativ), jede der drei Positionen (P1, P2, P3) einer der drei Greiferstellungen ("idle", "object", "no object") zuzuordnen
- und dazu weiter ausgebildet ist, die Positionen entlang des Hubweges der Größe nach zu sortieren und die zweite Greiferstellung der mittleren Positionen zuzuordnen und die dritte Greiferstellung derjenigen der beiden verbleibenden Randpositionen zuzuordnen, zu der die gleiche Bewegungsrichtung wie zur mittleren Position gespeichert ist und die erste Greiferstellung der verbleibenden Randposition zuzuordnen.

2. Sensor nach Anspruch 1, **dadurch gekennzeichnet dass** mehrere mittlere Positionen speicherbar sind und die Auswerteeinheit ausgebildet ist, die mehreren mittleren Positionen, jeweils zweiten Greiferstellungen zuzuordnen und über das Eingabemittel eine Anzahl unterschiedlich großer, zu greifender Objekte eingebbar ist.

3. Sensor nach einem der vorhergehenden Ansprüche, **dadurch gekennzeichnet, dass** die Auswerteinheit ausgebildet ist, nach dem Einlernvorgang und während des Normalbetriebes die Positionen des Betätigungselements bei einem Stopp des Greifers zu speichern und aus allen gespeicherten Werten, die einer Greiferstellung entsprechen, einen Mittelwert zu bilden und diesen Mittelwert als zukünftigen Wert für die Position zu nehmen.

4. Verfahren zum Einlernen eines Sensors (16) zur automatischen Erfassung von drei Positionen (P1, P2, P3) eines einen Greifer (10) antreibenden Hubkolbens (18) entlang eines linearen Hubweges (22) und zur automatischen Zuordnung der drei Positionen (P1, P2, P3) zu drei Greiferstellungen ("idle", "object", "no object"), wobei in einer ersten Greiferstellung ("idle") kein Objekt (15) gegriffen ist, in einer zweiten Greiferstellung ("object") ein Objekt (15) gegriffen ist und in einer dritten Greiferstellung ("no object") kein Objekt (15) gegriffen ist, obwohl es hätte gegriffen werden sollen,
wobei das Verfahren umfasst:
- Starten eines Einlernvorganges,
- Erfassen der Position des Hubkolbens (18) über einen am Hubkolben (18) angeordneten Permanentmagnet (24) magnetisch oder induktiv über den gesamten Hubweg (22),
- Erkennen eines Stoppens des Hubkolbens (18) und Speichern der Position des Hubkolbens (18) bei diesem Stopp,
- bei diesem Stopp Erfassen einer Bewegungsrichtung (positiv; negativ), aus der die Position (P1, P2, P3) angefahren wurde und Speichern der Bewegungsrichtung (positiv, negativ) als zur Position (P1, P2, P3) zugehörig,
- Stoppen des Einlernvorganges, wenn drei verschiedene Positionen (P1, P2, P3) mit den zugehörigen Bewegungsrichtungen (positiv, negativ) gespeichert wurden,
- Zuordnen von jeder der drei Positionen (P1, P2, P3) zu einer der drei Greiferstellungen ("idle", "object", "no object"), wobei das Zuordnen aus den gespeicherten Positionen (P1, P2, P3) und den gespeicherten, zugehörigen Bewegungsrichtungen (positiv, negativ) erfolgt, wobei, die Positionen entlang des Hubweges der Größe nach sortiert werden und die zweite Greiferstellung der mittleren Positionen zugeordnet wird und die dritte Greiferstellung derjenigen der beiden verbleibenden Randpositionen zugeordnet wird, zu der die gleiche Bewegungsrichtung wie zur mittleren Position gespeichert ist und die erste Greiferstellung der verbleibenden Randposition zugeordnet wird.

## Claims

1. Sensor for automatically detecting three positions (P1, P2, P3) of a piston (18) driving a gripper (10) along a linear stroke path (22) and for automatically assigning the three positions (P1, P2, P3) to three gripper positions, wherein in a first gripping position ("idle") no object (15) is gripped, in a second gripping position ("object") an object (15) is gripped and in a third gripping position ("no object") no object (15) is gripped although it should have been gripped, **characterised in that** the sensor (16) comprises
- an input means (26) for starting a teach-in process,
- a memory (30),
- an evaluation unit (32),
- wherein the sensor (16) is designed to detect the position of the piston (18) magnetically or inductively over the entire stroke path (22) via a permanent magnet (24) arranged on the piston (18),
- wherein the sensor (16) is designed to detect a stopping of the piston (18) during the teach-in process and to store the position (P1, P2, P3) of the piston (18) during this stop in the memory (30),
- and is further adapted to detect at this stop a direction of movement (positive; negative) from which this position (P1, P2, P3) was approached and to store it as a direction of movement associated with the position,
- and the evaluation unit (32) is adapted to stop the teach-in process when three different positions (P1, P2, P3) with the associated directions of movement (positive, negative) have been stored,
- and the evaluation unit (32) is further adapted to assign each of the three positions (P1, P2, P3) to one of the three gripper positions ("idle", "object", "no object") from the stored positions (P1, P2, P3) and the stored associated directions of movement (positive, negative)
- and is further adapted to sort the positions along the stroke path according to size and to assign the second gripping position to the middle positions and to assign the third gripping position to that of the two remaining edge positions to which the same direction of movement as to the middle position is stored and to assign the first gripping position to the remaining edge position.

2. Sensor according to claim 1, **characterised in that** a plurality of middle positions can be stored and the evaluation unit is designed to allocate a plurality of middle positions, in each case second gripper positions, and a number of differently sized objects to be gripped can be entered via the input means.

3. Sensor according to one of the preceding claims, **characterized in that** the evaluation unit is designed, after the teach-in process and during normal operation, to store the positions of the actuating element when the gripper stops and to form an average value from all stored values corresponding to a gripper position and to take this average value as a future value for the position.

4. Method for teaching a sensor (16) for automatically detecting three positions (P1, P2, P3) of a piston (18) driving a gripper (10) along a linear stroke path (22) and for automatically assigning the three positions (P1, P2, P3) to three gripper positions ("idle", "object", "no object"), wherein in a first gripping position ("idle") no object (15) is gripped, in a second gripping position ("object") an object (15) is gripped and in a third gripping position ("no object") no object (15) is gripped although it should have been gripped,
wherein the process comprises:
- starting a teach-in process,
- detecting the position of the piston (18) magnetically or inductively over the entire stroke path (22) by means of a permanent magnet (24) arranged on the piston (18),
- detecting a stop of the piston (18) and storing the position of the piston (18) at this stop,
- at this stop, detecting a direction of movement (positive; negative) from which the position (P1, P2, P3) was approached and storing the direction of movement (positive, negative) as belonging to the position (P1, P2, P3),
- stopping the teach-in process when three different positions (P1, P2, P3) with the associated movement directions (positive, negative) have been stored,
- assigning each of the three positions (P1, P2, P3) to one of the three gripper positions ("idle", "object", "no object"), the assignment being made from the stored positions (P1, P2, P3) and the stored associated directions of movement (positive, negative), wherein the positions along the stroke path are sorted according to size, and the second gripper position is assigned to the middle positions and the third gripper position is assigned to that of the two remaining edge positions to which the same direction of movement as to the middle position is stored and the first gripper position is assigned to the remaining edge position.

## Revendications

1. Capteur pour la détection automatique de trois positions (P1, P2, P3) d'un piston (18) commandant un dispositif préhension (10) le long d'une course linéaire (22) et pour l'affectation automatique des trois positions (P1, P2, P3) à trois positions du dispositif préhension, dans lequel, dans une première position de préhension ("au repos"), aucun objet (15) n'est saisi, dans une deuxième position de préhension ("objet"), un objet (15) est saisi et dans une troisième position de préhension ("aucun objet"), aucun objet (15) n'est saisi alors qu'il aurait dû l'être,
**caractérisé en ce que** le capteur (16) comprend
- un moyen d'entrée (26) pour lancer un processus d'apprentissage,
- une mémoire (30),
- une unité d'évaluation (32),
- dans lequel le capteur (16) est conçu pour détecter la position du piston (18) de manière magnétique ou inductive sur toute la course (22) par l'intermédiaire d'un aimant permanent (24) disposé sur le piston (18),
- dans lequel le capteur (16) est conçu pour détecter un arrêt du piston (18) pendant le processus d'apprentissage et pour enregistrer la position (P1, P2, P3) du piston (18) pendant cet arrêt dans la mémoire (30),
- et est en outre adapté pour détecter à cet arrêt une direction de mouvement (positive; négative) à partir de laquelle cette position (P1, P2, P3) a été approchée et pour l'enregistrer comme une direction de mouvement associée à la position,
- et l'unité d'évaluation (32) est adaptée pour arrêter le processus d'apprentissage lorsque trois positions différentes (P1, P2, P3) avec les sens de mouvement associés (positif, négatif) ont été enregistrées,
- et l'unité d'évaluation (32) est en outre adaptée pour affecter chacune des trois positions (P1, P2, P3) à l'une des trois positions de préhension ("inactif', "objet", "pas d'objet") à partir des positions mémorisées (P1, P2, P3) et des directions de mouvement associées enregistrées (positives, négatives)
- et est en outre adapté pour trier les positions le long de la course en fonction de la grandeur et pour attribuer la deuxième position de préhension aux positions médianes et pour attribuer la troisième position de préhension à celle des deux positions de bord restantes pour lesquelles la même direction de mouvement que la position médiane est enregistrée et pour attribuer la première position de préhension à la position de bord restante.

2. Capteur selon la revendication 1, **caractérisé en ce qu'**une pluralité de positions intermédiaires peuvent être enregistrées et l'unité d'évaluation est conçue pour attribuer une pluralité de positions intermédiaires, à chaque fois des secondes positions de préhension, et un certain nombre d'objets à saisir de différentes tailles peuvent être saisis par le biais du moyen d'entrée.

3. Capteur selon l'une des revendications précédentes, **caractérisé en ce que** l'unité d'évaluation est conçue, après le processus d'apprentissage et pendant le fonctionnement normal, pour enregistrer les positions de l'élément d'actionnement lorsque le dispositif préhension s'arrête et pour former une valeur moyenne à partir de toutes les valeurs mémorisées correspondant à une position de préhension et pour prendre cette valeur moyenne comme valeur future pour la position.

4. Procédé pour apprendre à un capteur (16) à détecter automatiquement trois positions (P1, P2, P3) d'un piston (18) entraînant un dispositif préhension (10) le long d'une course linéaire (22) et pour affecter automatiquement les trois positions (P1, P2, P3) à trois positions de préhension ("au repos", "objet", "pas d'objet"), dans laquelle dans une première position de préhension ("au repos") aucun objet (15) n'est saisi, dans une deuxième position de préhension ("objet") un objet (15) est saisi et dans une troisième position de préhension ("pas d'objet") aucun objet (15) n'est saisi alors qu'il aurait dû l'être,
où le procédé comprend :
- en lançant un processus d'apprentissage,
- la détection de la position du piston (18) par voie magnétique ou inductive sur toute la course (22) au moyen d'un aimant permanent (24) disposé sur le piston (18),
- détecter un arrêt du piston (18) et mémoriser la position du piston (18) à cette arrêt,
- à cet arrêt, détecter une direction de mouvement (positive; négative) à partir de laquelle la position (P1, P2, P3) a été approchée et enregistrer la direction de mouvement (positive, négative) comme appartenant à la position (P1, P2, P3),
- l'arrêt du processus d'apprentissage lorsque trois positions différentes (P1, P2, P3) avec les directions de mouvement associées (positive, négative) ont été enregistrées,
- l'affectation de chacune des trois positions (P1, P2, P3) à l'une des trois positions de préhension ("au repos", "objet", "sans objet"), l'affectation étant faite à partir des positions enregistrées (P1, P2, P3) et des directions de mouvement associées enregistrées (positives, négatives), dans laquelle les positions le long de la course sont triées en fonction de leur grandeur, et la deuxième position de préhension est affectée aux positions médianes et la troisième position de préhension est affectée à celle des deux positions de bord restantes auxquelles le même sens de mouvement que celui de la position médiane est enregistré et la première position de préhension est affectée à la position de bord restante.
